# EUROPÄISCHE PATENTANMELDUNG

(11) **EP 4 512 544 A1**
(43) Veröffentlichungstag der Anmeldung: **26.02.2025**
(21) Anmeldenummer: 23192439.0
(22) Anmeldetag: 21.08.2023
(51) Int. Cl.: B21D 5/00, B21D 5/02, G05B 19/409, G02B 30/00, G06F 3/048, H04N 13/00

(54) **BIEGEMASCHINE**

(71) Anmelder: Bystronic Laser AG, 3362 Niederönz (CH)
(72) Erfinder: Barwich, Paul, 99310 Arnstadt (DE); Linz, Christoph, 99334 Amt Wachsenburg (DE)
(74) Vertreter: Fink Numrich Patentanwälte PartmbB

(57) **Zusammenfassung**

Die Erfindung betrifft eine Biegemaschine, die eine Biegewange (6) beinhaltet, welche zumindest in einer Arbeitsrichtung (z) der Biegemaschine (1) bewegbar ist, um ein Werkstück durch Biegen entlang einer Biegelinie (B) umzuformen. Die Biegemaschine (1) beinhaltet ferner eine Anzeigeeinrichtung (10) und eine Steuereinrichtung (11), wobei die Anzeigeeinrichtung (10) im Betrieb der Biegemaschine (1) durch die Steuereinrichtung (11) angesteuert wird, um Assistenzinformation zur Assistenz eines Bedieners mittels der Anzeigeeinrichtung (10) anzuzeigen. Die Anzeigeeinrichtung (10) enthält einen oder mehrere 3D-Bilderzeuger (9), welche dazu eingerichtet sind, zumindest einen Teil der Assistenzinformation als ein frei im Raum schwebendes dreidimensionales Bild (IM) anzuzeigen.

## Beschreibung

Die Erfindung betrifft eine Biegemaschine gemäß dem Oberbegriff des Anspruchs 1.

Zur Bedienung von Biegemaschinen, wie z.B. Abkantpressen, ist die Verwendung einer Benutzerschnittstelle in der Form eines Monitors bekannt, der z.B. seitlich neben der Biegemaschine angeordnet ist. Der Monitor ist in der Regel als Touchscreen ausgestaltet, über den ein Bediener durch Berührung eines berührungssensitiven Displays Befehle eingibt und auf dem Informationen zum Biegevorgang, wie z.B. relevante Biegeparameter, angezeigt werden.

Aus dem Stand der Technik ist es ferner bekannt, dem Bediener einer Biegemaschine Informationen zum Biegevorgang unmittelbar am Bearbeitungsbereich, in dem ein Werkstück umgeformt wird, bereitzustellen. Beispielsweise offenbart die Druckschrift EP 3 843 914 B1 eine Biegemaschine, bei der zweidimensionale Bilder mittels eines Projektors an die vordere Seite des oberen Pressbalken oder des oberen Biegewerkzeugs projiziert werden. Die Bilder enthalten den hinteren Teil des Bearbeitungsbereichs, der mittels einer Kamera erfasst wird, sowie Informationen bzw. Anweisungen zum weiteren Verlauf der Bearbeitung des Werkstücks.

Die Druckschrift JP 2014-65060 A offenbart ein Assistenzsystem mit einer AR-Brille (AR = Augmented Reality), bei dem einem Bediener einer Biegemaschine über die AR-Brille dreidimensionale Werkstücke oder Biegewerkzeuge an Stellen der Biegemaschine angezeigt werden, an denen das entsprechende Werkstück bzw. Biegewerkzeug positioniert werden soll. Darüber hinaus können über die AR-Brille zusätzliche Informationen zum Biegevorgang wiedergegeben werden. Mit diesem Assistenzsystem werden zwar intuitiv Informationen zum Biegevorgang bereitgestellt, jedoch muss der Bediener hierzu immer eine AR-Brille tragen.

Aufgabe der Erfindung ist es, eine Biegemaschine zu schaffen, mit der die Wiedergabe von Assistenzinformation zur Assistenz eines Bedieners über eine Anzeigeeinrichtung verbessert wird.

Diese Aufgabe wird durch die Biegemaschine gemäß Patentanspruch 1 gelöst. Weiterbildungen der Erfindung sind in den abhängigen Ansprüchen definiert.

Die erfindungsgemäße Biegemaschine beinhaltet ein Biegewange, welche zumindest in einer Arbeitsrichtung der Biegemaschine bewegbar ist, um ein Werkstück, das vorzugsweise ein Blech ist, durch Biegen entlang einer Biegelinie umzuformen. Vorzugsweise ist die Arbeitsrichtung die vertikale Richtung. Die Biegemaschine beinhaltet ferner eine Anzeigeeinrichtung und eine Steuereinrichtung, wobei die Anzeigeeinrichtung im Betrieb der Biegemaschine durch die Steuereinrichtung angesteuert wird, um Assistenzinformation zur Assistenz eines Bedieners mittels der Anzeigeeinrichtung anzuzeigen.

Die erfindungsgemäße Biegemaschine zeichnet sich dadurch, dass die Anzeigeeinrichtung einen oder mehrere 3D-Bilderzeuger enthält, welche dazu einrichtet sind, zumindest einen Teil der Assistenzinformation als ein frei im Raum schwebendes dreidimensionales Bild anzuzeigen. Unter einem frei im Raum schwebenden dreidimensionalen Bild ist dabei eine dreidimensionale Darstellung zu verstehen, welche mit der realen Umgebung überlagert ist. Da die Anzeigeeinrichtung zur Biegemaschine gehört, sind auch der oder die 3D-Bilderzeuger Bestandteil der Biegemaschine. Insbesondere sind der oder die 3D-Bilderzeuger an der Biegemaschine angebracht, d.h. mechanisch mit der Biegemaschine bzw. einem oder mehreren Bauteilen der Biegemaschine verbunden.

Die erfindungsgemäße Biegemaschine weist einen Vorteil auf, dass dem Bediener einer Biegemaschine intuitiv dreidimensionale Informationen vermittelt werden, ohne dass der Bediener eine optische Einrichtung, wie z.B. eine AR-Brille, tragen muss. Vielmehr wird bereits durch den oder die 3D-Bilderzeuger der Biegemaschine ein dreidimensionales Bild generiert.

Im Falle, dass in der erfindungsgemäßen Biegemaschine mehrere 3D-Bilderzeuger vorgesehen sind, setzt sich das angezeigte dreidimensionale Bild aus mehreren separaten Teilbildern zusammen, wobei jeder 3D-Bilderzeuger ein entsprechendes Teilbild erzeugt. Die Zusammensetzung der Teilbilder zu einem Gesamtbild bzw. die Synchronisation des Gesamtbilds aus den Teilbildern wird mittels der Steuereinrichtung berechnet, die dann die Anzeigeeinrichtung geeignet ansteuert.

Der Begriff des dreidimensionalen Bilds, das über den oder die 3D-Bilderzeuger angezeigt wird, ist weit zu verstehen. Insbesondere muss es sich nicht um ein statisches Bild handeln, sondern das Bild kann bei einer Veränderung der anzuzeigenden Assistenzinformation auch geeignet verändert werden. Darüber hinaus kann das angezeigte dreidimensionale Bild ein animiertes dreidimensionales Bild und in diesem Sinne eine Videosequenz sein.

In einer Ausgestaltung der erfindungsgemäßen Biegemaschine enthält die Anzeigeeinrichtung der Biegemaschine ausschließlich den oder die 3D-Bilderzeuger zur Anzeige von Assistenzinformation. Nichtsdestotrotz ist es gegebenenfalls auch möglich, dass die Anzeigeeinrichtung neben dem oder den 3D-Bilderzeugern zusätzlich noch ein Display umfasst, wobei das Display vorzugsweise ein Bediendisplay ist, über das ein Bediener auch Bedienbefehle eingeben kann (wie z.B. ein Touchscreen).

Bei der erfindungsgemäßen Biegemaschine handelt es sich vorzugsweise um eine Abkantpresse zum freien Biegen des Werkstücks zwischen einer beweglichen Oberwange und einer stationären Unterwange, wobei die oben genannte Biegewange in diesem Fall die Oberwange ist. Nichtsdestotrotz kann die erfindungsgemäße Biegemaschine gegebenenfalls auch von einem anderen Typ sein. Zum Beispiel kann es sich um einen Panelbender handeln.

In einer besonders bevorzugten Ausführungsform ist zumindest einer der 3D-Bilderzeuger und gegebenenfalls jeder der vorhandenen 3D-Bilderzeuger derart ausgestaltet, dass er das dreidimensionale Bild erzeugt, ohne dass eine Trägerfläche aus festem Material (z.B. aus Glas oder Kunststoff) zur Visualisierung des dreidimensionalen Bilds benötigt wird. 3D-Bilderzeuger, die zur Erzeugung eines dreidimensionalen Bilds keine Trägerfläche aus festem Material benötigen, sind an sich aus dem Stand der Technik bekannt. Solche 3D-Bilderzeuger werden erfindungsgemäß erstmalig zur Anzeige von Assistenzinformation in einer Biegemaschine genutzt.

In einer bevorzugten Variante beinhaltet zumindest einer der 3D-Bilderzeuger eine oder mehrere Lichtleisten, wobei durch Rotation der Lichtleiste oder der Lichtleisten das dreidimensionale Bild generiert wird. Die Rotationebene der Lichtleiste bzw. der Lichtleisten stellt dabei eine (virtuelle) Displayfläche dar, über welche das dreidimensionale Bild sichtbar wird, ohne dass eine Trägerfläche aus festem Material benötigt wird. Solche 3D-Bilderzeuger sind bekannt und werden beispielsweise von der Firma EYE SYSTEMS International GmbH unter dem Markennamen Holocircle^{®} vertrieben (www.holocircle.com).

In einer weiteren Ausführungsform beinhaltet zumindest einer der 3D-Bilderzeuger einen Projektor sowie einen oder mehrere Fäden und/oder eine oder mehrere Leisten, wobei durch Rotation des Fadens oder der Fäden und/oder der Leiste oder der Leisten eine Projektionsfläche gebildet wird, auf welche der Projektor das dreidimensionale Bild generiert.

In einer weiteren Ausführungsform erzeugt zumindest einer der 3D-Bilderzeuger das dreidimensionale Bild im Luftmedium, vorzugsweise im Luftmedium zwischen der Biegewange und einer parallel zu dieser verlaufenden Gegenbiegewange. Auch dieser 3D-Bilderzeuger benötigt zur Erzeugung des dreidimensionalen Bilds keine Trägerfläche aus festem Material. In einer bevorzugten Variante ist dieser 3D-Bilderzeuger derart ausgestaltet, dass er das dreidimensionale Bild durch Ionisierung von Luftmolekülen über Laserstrahlung generiert, wie z.B. der 3D-Bilderzeuger, der von der Firma Burton Inc., Japan, entwickelt wurde (www.burton-jp.com).

In einer weiteren Variante der erfindungsgemäßen Biegemaschine ist es auch möglich, dass zumindest einer der 3D-Bilderzeuger und gegebenenfalls jeder der vorhandenen 3D-Bilderzeuger derart ausgestaltet ist, dass er das dreidimensionale Bild mit Hilfe zumindest einer Trägerfläche aus festem Material generiert. In diesem Fall muss ein Betrachter auf die entsprechende Trägerfläche aus festem Material blicken, damit er das dreidimensionale Bild sieht. Als 3D-Bilderzeuger mit zumindest einer Trägerfläche aus festem Material kann beispielsweise ein an sich bekannter Hologramm-Projektor genutzt werden.

In einer weiteren bevorzugten Ausführungsform der erfindungsgemäßen Biegemaschine ist zumindest einer der 3D-Bilderzeuger und gegebenenfalls jeder der vorhandenen 3D-Bilderzeuger dazu eingerichtet, das dreidimensionale Bild in einem Bearbeitungsbereich der Biegemaschine, d.h. in einem räumlichen Bereich an oder benachbart zur Biegewange und vorzugsweise an oder benachbart zu der Biegelinie, anzuzeigen.

In einer weiteren bevorzugten Ausgestaltung sind mehrere 3D-Bilderzeuger in einer Richtung parallel zur Biegelinie angeordnet. Auf diese Weise kann die Assistenzinformation an verschiedenen Stellen entlang der Biegelinie wiedergegeben werden. Vorzugsweise sind die 3D-Bilderzeuger entlang der gesamten Länge der Biegelinie angeordnet.

In einer weiteren, besonders bevorzugten Ausführungsform der erfindungsgemäßen Biegemaschine ist zumindest einer der 3D-Bilderzeuger und gegebenenfalls jeder der vorhandenen 3D-Bilderzeuger im Inneren der Biegemaschine angeordnet. Alternativ oder zusätzlich kann zumindest einer der 3D-Bilderzeuger und gegebenenfalls jeder der vorhandenen 3D-Bilderzeuger an einer Biegewinkel-Messeinrichtung angeordnet sein. Alternativ oder zusätzlich ist es auch möglich, dass zumindest einer der 3D-Bilderzeuger und gegebenenfalls jeder der vorhandenen 3D-Bilderzeuger an einem Anschlag für das Werkstück, insbesondere an einem Hinteranschlag im Inneren der Biegemaschine, angeordnet ist. Ebenso kann zumindest einer der 3D-Bilderzeuger und gegebenenfalls jeder der vorhandenen 3D-Bilderzeuger an einem Maschinenrahmen der Biegemaschine angeordnet sein. Alternativ oder zusätzlich ist es auch möglich, dass zumindest einer der 3D-Bilderzeuger und gegebenenfalls jeder der vorhandenen 3D-Bilderzeuger an einem Träger für Biegewerkzeuge angeordnet ist. Ferner kann zumindest einer der 3D-Bilderzeuger und gegebenenfalls jeder der vorhandenen 3D-Bilderzeuger an einer Biegehilfe angeordnet sein. Biegehilfen sind an sich bekannt und stellen an der Biegemaschine vorgesehene Einrichtungen dar, welche die Führung der umzuformenden Werkstücke und insbesondere der zu biegenden Bleche unterstützen. Der oben erwähnte Anschlag und/oder die oben erwähnte Biegewinkel-Messeinrichtung sind vorzugsweise beweglich ausgestaltet.

In einer weiteren bevorzugten Ausgestaltung ist zumindest einer der 3D-Bilderzeuger und gegebenenfalls jeder der vorhandenen 3D-Bilderzeuger bewegbar, um den Ort des dreidimensionalen Bilds zu verändern, wobei der zumindest eine 3D-Bilderzeuger vorzugsweise parallel zur Biegelinie verfahrbar ist. Hierdurch wird die flexible Positionierung des dreidimensionalen Bilds an unterschiedlichen Stellen der Biegemaschine erreicht. Die Bewegbarkeit des 3D-Bilderzeugers kann gegebenenfalls dadurch erreicht werden, dass der 3D-Bilderzeuger an dem oben erwähnten beweglichen Anschlag bzw. der oben erwähnten beweglichen Biegewinkel-Messeinrichtung angeordnet ist.

In einer weiteren bevorzugten Variante ist die erfindungsgemäße Biegemaschine derart ausgestaltet, dass zumindest zeitweise in dem dreidimensionalen Bild virtuell das Werkstück in einer Sollform wiedergegeben wird, welche der erwünschten Form des realen Werkstücks zu einem Zeitpunkt vor oder während oder nach einem Biegeschritt entspricht. Hierdurch wird eine sehr effektive Unterstützung des Bedieners erreicht, da diesem intuitiv veranschaulicht wird, wie das Werkstück gebogen werden soll. Der oben genannte Zeitpunkt vor bzw. während bzw. nach einem Biegeschritt kann je nach Ausgestaltung ein aktueller oder vergangener oder zukünftiger Zeitpunkt sein. In einer bevorzugten Ausgestaltung kann das dreidimensionale Bild auch eine Animation zumindest eines Teilprozesses des Biegevorgangs oder gegebenenfalls des gesamten Biegevorgangs sein. Das virtuell wiedergegebene Werkstück kann unterschiedlich dargestellt werden. In einer Variante wird das Werkstück maßstabsgetreu wiedergegeben. Nichtsdestotrotz ist es auch möglich, dass das Werkstück verkleinert oder vergrößert dargestellt wird.

In einer bevorzugten Ausgestaltung der obigen Ausführungsform ist das virtuell wiedergegebene Werkstück an einer Sollposition positioniert, welche die erwünschte Position des realen Werkstücks zu dem Zeitpunkt vor oder während oder nach dem Biegeschritt ist. Hierdurch wird dem Bediener der Biegemaschine nicht nur die Sollform des Werkstücks, sondern auch dessen erwünschte Position an der Biegemaschine vermittelt.

In einer weiteren bevorzugten Ausführungsform ist an der Biegemaschine ferner eine Bilderfassungseinrichtung, wie z.B. eine Kamera, vorgesehen, um ein Bild enthaltend das reale Werkstück und das virtuell wiedergegebene Werkstück zu erfassen. Die Steuereinrichtung ist dabei derart ausgestaltet, dass sie ermittelt, ob in dem erfassten Bild die Form des realen Werkstücks von der Sollform des virtuell wiedergegebenen Werkstücks und/oder die Position des realen Werkstücks von der Sollposition des virtuell wiedergegebenen Werkstücks abweicht. Im Falle einer Abweichung löst die Steuereinrichtung eine vorgegebene Aktion aus. Mit dieser Variante können auf einfache Weise durch einen Bildvergleich Fehler im durchgeführten Biegeprozess erkannt werden. Diese Fehler führen zum Auslösen einer vorgegebenen Aktion, die je nach Ausführungsform unterschiedlich ausgestaltet sein kann. Insbesondere kann die vorgegebene Aktion auch mehrere Teilaktionen umfassen. Zum Beispiel kann die vorgegebene Aktion die Unterbrechung des Biegevorgangs und/oder die Ausgabe einer Warnmeldung, vorzugsweise über die Anzeigeeinrichtung und insbesondere über zumindest einen 3D-Bilderzeuger, umfassen.

In einer weiteren bevorzugten Ausführungsform ist die erfindungsgemäße Biegemaschine derart ausgestaltet, dass zumindest zeitweise in dem dreidimensionalen Bild virtuell zumindest ein Biegewerkzeug wiedergegeben ist. Das zumindest eine virtuell wiedergegebene Biegewerkzeug kann z.B. zusammen mit einem virtuell wiedergegeben Werkstück in dem dreidimensionalen Bild wiedergegeben werden, um z.B. einen Biegeschritt zu visualisieren. Hierdurch kann sehr intuitiv ein Biegeschritt bzw. Biegeprozess veranschaulicht werden. Ebenso ist es möglich, dass das zumindest eine virtuell wiedergegebene Biegewerkzeug ohne Werkstück im dreidimensionalen Bild dargestellt wird, z.B. zur Assistenz in einem Umrüstvorgang, bei dem an der Biegemaschine Biegewerkzeuge für einen neuen Biegeprozess getauscht werden. Das zumindest eine virtuell wiedergegebene Biegewerkzeug kann je nach Ausführungsform maßstabsgetreu oder gegebenenfalls auch verkleinert oder vergrößert wiedergegeben werden. Ferner kann das zumindest eine virtuell wiedergegebene Biegewerkzeug auch in einem animierten dreidimensionalen Bild dargestellt werden, um hierdurch einen Biegevorgang oder einen Vorgang zum Wechseln von Biegewerkzeugen zu veranschaulichen

In einer weiteren bevorzugten Ausführungsform ist das zumindest eine virtuell wiedergegebene Biegewerkzeug an einer Sollposition positioniert, welche die erwünschte Position des zumindest einen realen Biegewerkzeugs zu einem Zeitpunkt vor oder während oder nach einem Biegeschritt ist. Insbesondere kann das zumindest eine virtuell wiedergegebene Biegewerkzeug bei einem Umrüstvorgang an der erwünschten Sollposition des entsprechenden Werkzeugträgers angezeigt werden. Der oben genannte Zeitpunkt vor bzw. während bzw. nach einem Biegungsschritt kann je nach Ausgestaltung ein aktueller oder vergangener oder zukünftiger Zeitpunkt sein.

In einer weiteren bevorzugten Variante der soeben beschriebenen Ausführungsform ist ein Bilderfassungsmittel vorgesehen, um ein Bild enthaltend das zumindest eine reale Biegewerkzeug und das zumindest eine virtuell wiedergegebene Biegewerkzeug zu erfassen. Die Steuereinrichtung ist dabei derart ausgestaltet, dass sie ermittelt, ob in dem erfassten Bild die Position des zumindest einen realen Biegewerkzeugs von der Sollposition des zumindest einen virtuell wiedergegebenen Biegewerkzeugs abweicht, wobei bei einer Abweichung die Steuereinrichtung eine vorbestimmte Aktion auslöst. In Analogie zu der oben beschriebenen vorgegebenen Aktion kann die vorbestimmte Aktion mehrere Teilaktionen umfassen. Zum Beispiel kann die vorbestimmte Aktion die Unterbrechung des Biegevorgangs oder Umrüstvorgangs und/oder die Ausgabe einer Warnmeldung, vorzugsweise über die Anzeigeeinrichtung und insbesondere über zumindest einen 3D-Bilderzeuger, umfassen. Mit der soeben beschriebenen Ausführungsform können sehr gut Fehler im Biegeprozess oder bei einem Wechsel von Biegewerkzeugen bzw. einer Neubestückung der Biegemaschine mit Biegewerkzeugen erkannt werden.

In einer weiteren bevorzugten Ausführungsform ist in dem dreidimensionalen Bild sowohl ein virtuell wiedergegebenes Werkstück als auch zumindest ein virtuell wiedergegebenes Biegewerkzeug enthalten, wobei eine Sollkonstellation dargestellt ist, welche eine erwünschte Anordnung von dem realen Werkstück und dem zumindest einen realen Biegewerkzeug zu einem Zeitpunkt vor oder während oder nach einem Biegeschritt repräsentiert, wobei dieser Zeitpunkt ein aktueller oder vergangener oder zukünftiger Zeitpunkt sein kann. Die Sollkonstellation aus virtuellem Werkstück und dem zumindest einen virtuell wiedergegebenen Biegewerkzeug kann maßstabsgetreu oder verkleinert oder vergrößert im dreidimensionalen Bild dargestellt werden. Sollte in dieser Ausführungsform sowohl die oben beschriebene Bilderfassungseinrichtung als auch das oben beschriebene Bilderfassungsmittel vorhanden sein, entspricht das Bilderfassungsmittel vorzugsweise der Bilderfassungseinrichtung, d.h. es handelt sich um dieselbe Komponente.

In einer weiteren bevorzugten Ausführungsform ist die erfindungsgemäße Biegemaschine derart ausgestaltet, dass zumindest zeitweise in dem dreidimensionalen Bild ein oder mehrere Biegeparameter in textueller und/oder graphischer Form wiedergegeben sind. Hierdurch wird eine sehr gute Unterstützung des Bedieners während der Ausführung des Biegevorgangs erreicht. Der oder die Biegeparameter können z.B. Informationen zu Biegewinkeln und/oder zur Biegereihenfolge und/oder zu Anschlagpositionen und/oder zu Eigenschaften des bearbeiteten Werkstücks und/oder zu Eigenschaften der verwendeten Biegewerkzeuge und dergleichen umfassen.

In einer weiteren bevorzugten Ausgestaltung der Erfindung sind der oder die 3D-Bilderzeuger durch einen Bediener mittels Gesten steuerbar, d.h. in der Biegemaschine ist eine Gestensteuerung enthalten, mit der vorzugsweise auch Bedienbefehle zur Steuerung der Biegemaschine eingegeben werden können. Hierdurch kann eine sehr intuitive Bedienung der Biegemaschine erreicht werden. Vorzugsweise kann mit der Gestensteuerung auch das über den oder die 3D-Bilderzeuger wiedergegebene dreidimensionale Bild gedreht und/oder verschoben werden.

Ausführungsbeispiele der Erfindung werden nachfolgend anhand der beigefügten Figuren detailliert beschrieben.

Es zeigen:
- Fig. 1: eine perspektivische Vorderansicht einer Biegemaschine gemäß einer Ausführungsform der Erfindung;
- Fig. 2: eine Rückansicht der Biegemaschine aus Fig. 1;
- Fig. 3: eine Detailansicht aus Fig. 2, welche das erzeugte dreidimensionale Bild verdeutlicht;
- Fig. 4: eine perspektivische Seitenansicht einer weiteren Ausführungsform einer erfindungsgemäßen Biegemaschine;
- Fig. 5: eine Detailansicht aus Fig. 4, welche das erzeugte dreidimensionale Bild verdeutlicht; und
- Fig. 6: eine ausschnittsweise Rückansicht der Biegemaschine aus Fig. 4.

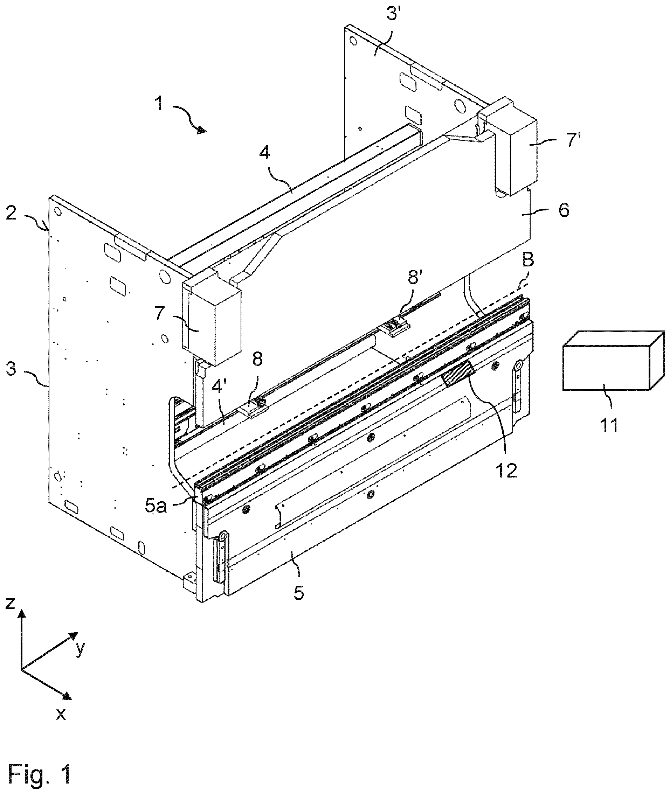

Nachfolgend werden Ausführungsformen der Erfindung anhand einer Biegemaschine in der Form einer Abkantpresse beschrieben. In allen nachfolgenden Figuren sind nur diejenigen Bauteile der Biegemaschine gezeigt, welche erfindungsrelevant sind. Ferner ist in allen nachfolgenden Figuren die räumliche Ausrichtung der Biegemaschine durch ein kartesisches Koordinatensystem mit x-Achse, y-Achse und z-Achse angedeutet. Die x-Achse entspricht der Längsrichtung der Biegemaschine von hinten nach vorne. An der Vorderseite der Biegemaschine wird ein entsprechendes Werkstück zur Bearbeitung in die Biegemaschine eingeschoben. Die y-Achse stellt die Querrichtung der Biegemaschine dar. Die Querrichtung verläuft parallel zur Biegelinie, entlang der das entsprechende Werkstück gebogen wird. Diese Biegelinie ist aus Fig. 1 ersichtlich und dort mit Bezugszeichen B bezeichnet. Die z-Achse entspricht der vertikalen Richtung von unten nach oben.

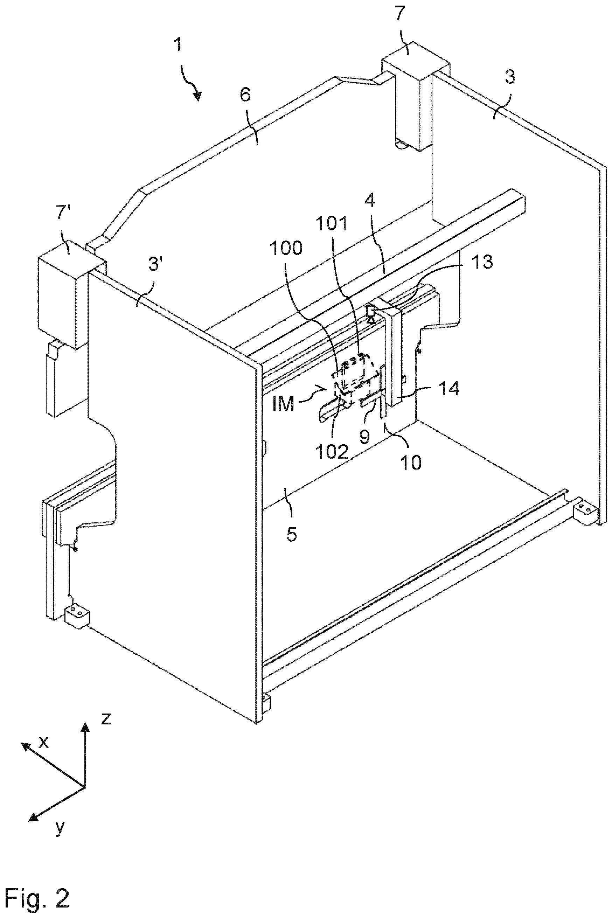

Fig. 1 zeigt eine erste Ausführungsform der erfindungsgemäßen Biegemaschine. Die Biegemaschine ist mit Bezugszeichen 1 bezeichnet und stellt eine Abkantpresse dar. Sie umfasst einen Maschinenrahmen 2, von dem in der Darstellung der Fig. 1 zwei Seitenständer 3 und 3' sowie ein oberer Querbalken 4 und ein unterer Querbalken 4' ersichtlich sind. In an sich bekannter Weise umfasst die Biegemaschine 1 eine in z-Richtung bewegliche Biegewange 6 in der Form einer Oberwange sowie eine stationäre Gegenbiegewange 5 in der Form einer Unterwange. Die Bewegung der Biegewange 6 wird über zwei hydraulische Aktuatoren 7 und 7' bewirkt. Auf der Oberseite der Gegenbiegewange 5 befindet sich ein Werkzeugträger 5a, der in den weiteren Figuren 2 bis 6 nicht wiedergegeben ist. Auf diesem Werkzeugträger 5a werden entsprechende Unterwerkzeuge, wie z.B. Matrizen, befestigt, wobei diese Unterwerkzeuge aus den dargestellten Figuren nicht ersichtlich sind. Analog zur Gegenbiegewange 5 ist auch an der Biegewange 6 ein Werkzeugträger vorgesehen, der aus Übersichtlichkeitsgründen in den Figuren nicht dargestellt ist. In diesen Werkzeugträger werden (nicht gezeigte) Oberwerkzeuge eingehängt. Das zu biegende Werkstück, das in der hier beschriebenen Ausführungsform ein Blech ist, wird zwischen Biegewange 6 und Gegenbiegewange 5 positioniert. Anschließend fährt die Biegewange 6 nach unten hin zu den Unterwerkzeugen, so dass Ober- und Unterwerkzeuge auf das Werkstück einwirken, um dessen Biegung zu bewirken.

Bei der Durchführung des Biegevorgangs befindet sich an der Vorderseite der Biegemaschine ein Bediener, der zu biegende Werkstücke in die Biegemaschine einführt und entsprechende Biegeschritte auslöst, welche automatisch durch die Biegemaschine am Werkstück ausgeführt werden. Damit das zu biegende Werkstück durch den Bediener nicht zu weit in das Innere der Biegemaschine 1 eingeführt wird, sind am unteren Querträger 4' zwei Anschläge 8, 8' in der Form von Hinteranschlägen vorgesehen. Die Anschläge können mit einer entsprechenden Aktorik entlang des Querträgers 4' verfahren werden.

Die Biegemaschine 1 enthält ferner eine Steuereinrichtung 11, die in Fig. 1 lediglich schematisch angedeutet ist und in den weiteren Figuren weggelassen wurde. Die Steuereinrichtung 11 dient zur Steuerung der Biegemaschine und wechselwirkt mit einer Benutzerschnittstelle, über welche der Bediener die Biegemaschine bedienen kann. Üblicherweise umfasst diese Benutzerschnittstelle eine Anzeigeeinrichtung in der Form eines Touchscreens, über den die Bedienung der Biegemaschine durch den Bediener durchgeführt wird. In der hier beschriebenen Ausführungsform ist als Anzeigeeinrichtung 10 ein 3D-Bilderzeuger 9 vorgesehen. Der 3D-Bilderzeuger 9 bzw. die Anzeigeeinrichtung 10 sind in Fig. 1 verdeckt. Sie sind jedoch aus der Rückansicht der Fig. 2 ersichtlich. Der 3D-Bilderzeuger 9 kann zusätzlich zu einem Touchscreen an der Biegemaschine vorgesehen sein. Der 3D-Bilderzeuger 9 kann jedoch gegebenenfalls auch ohne zusätzlichen Touchscreen verwendet werden. In diesem Fall kann z.B. eine Gestensteuerung zur Bedienung der Biegemaschine genutzt werden.

In Fig. 1 ist ferner schematisch über ein schraffiertes Rechteck eine Biegewinkel-Messeinrichtung 12 angedeutet, die entlang der Vorderseite der Gegenbiegewange 5 in der y-Richtung verfahrbar ist. Über diese optionale Biegewinkel-Messeinrichtung 12 kann während des Biegevorgangs der Biegewinkel überwacht werden. In einer Variante der Erfindung ist der 3D-Bilderzeuger 9 an der Biegewinkel-Messeinrichtung 12 angebracht.

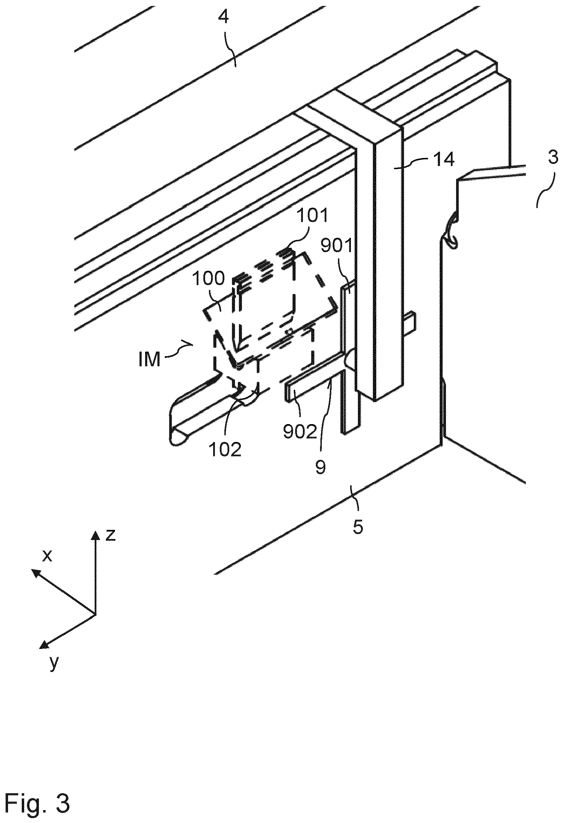

Fig. 2 zeigt eine Rückansicht der Biegemaschine aus Fig. 1. Aus dieser Ansicht wird die Anzeigeeinrichtung 10 ersichtlich, die den 3D-Bilderzeuger 9 umfasst. Dieser 3D-Bilderzeuger 9 ist derart ausgestaltet, dass er ein frei im Raum schwebendes dreidimensionales Bild erzeugen kann, ohne dass der Bediener eine optische Einrichtung, wie z.B. eine AR-Brille, tragen muss. In der Ausführungsform der Fig. 2 erzeugt der 3D-Bilderzeuger 9 das dreidimensionale Bild über zwei rotierende Lichtleisten, welche Licht in Richtung zur Vorderseite der Biegemaschine abstrahlen. Die Lichtleisten werden weiter unten noch näher anhand von Fig. 3 beschrieben. Das durch den 3D-Bilderzeuger 9 generierte Bild ist mit Bezugszeichen IM bezeichnet. Dieses Bild IM wird im Inneren der Biegemaschine zwischen Biegewange 6 und Gegenbiegewange 5 wiedergegeben, so dass es für den Bediener während der Bedienung der Biegemaschine gut sichtbar ist.

Das wiedergegebene Bild IM ist in Fig. 2 schematisch durch gestrichelte Linien angedeutet. Dabei ist zu beachten, dass dieses Bild IM nur sichtbar wird, wenn der Bediener auf die lichtabstrahlenden Seiten der rotierenden Lichtleisten blickt, d.h. wenn er aus Richtung der Vorderseite der Biegemaschine auf die rotierenden Lichtleisten schaut. Mit anderen Worten ist in der Realität das Bild IM nicht aus dem Blickwinkel der Fig. 2 ersichtlich. Das Bild IM gibt virtuell einen Biegeschritt wieder. Hierzu wird virtuell ein gerade gebogenes Werkstück 100 dargestellt, auf das ein Oberwerkzeug 101 und ein Unterwerkzeug 102 einwirken. Der virtuell wiedergegebene Biegeschritt entspricht einer Sollkonstellation eines real gerade durchgeführten Biegeschritts oder eines vergangenen Biegeschritts oder eines zukünftigen Biegeschritts.

Der 3D-Bilderzeuger 9 ist über eine vertikal verlaufende Strebe 14 an dem oberen Querträger 4 bewegbar befestigt. Mit anderen Worten kann der 3D-Bilderzeuger 9 zusammen mit der Strebe 14 entlang der Querrichtung y und somit entlang der Biegelinie B verfahren werden. Hierdurch kann eine flexible Positionierung des dreidimensionalen Bilds IM erreicht werden. Das Bild IM wird dabei vorzugsweise an einer Position in y-Richtung wiedergegeben, an der der entsprechende reale Biegeschritt durchgeführt wird bzw. durchgeführt wurde bzw. durchgeführt werden wird. Auf diese Weise kommt der Bediener über das dargestellte dreidimensionale Bild IM immer sehr gute Rückmeldung, ob der Biegevorgang momentan richtig ausgeführt wird.

Optional kann in der Biegemaschine 1 auch eine Bilderfassungseinrichtung 13 in der Form einer Kamera vorgesehen sein, die so anzuordnen ist, dass sie auch das dreidimensionale Bild IM erfassen kann. Die Kamera ist in Fig. 2 lediglich schematisch wiedergegeben, wobei die dargestellte Position und Ausrichtung der Kamera nicht den realen Gegebenheiten entspricht. Mit der Kamera wird der Biegeprozess erfasst, während gleichzeitig das dreidimensionale Bild IM wiedergegeben wird, das die Sollkonstellation des real gerade durchgeführten Biegeschritts darstellt. Die mit der Kamera erfassten Bilder werden an die Steuereinrichtung 11 übertragen und dort ausgewertet. Wird über einen Bildvergleich des real durchgeführten Biegeschritts mit dem virtuellen Biegeschritt entsprechend dem Bild IM festgestellt, dass eine Abweichung zwischen realem Biegeschritt und virtuellem Biegeschritt auftritt, können geeignete Aktionen durch die Steuereinrichtung 11 ausgelöst werden. Beispielsweise kann der Biegeprozess unterbrochen werden, oder der Bediener kann darüber informiert werden, dass der Biegevorgang fehlerhaft ausgeführt wird, indem beispielsweise eine entsprechende Meldung in dem Bild IM angezeigt wird.

Fig. 3 zeigt nochmals eine Detailansicht des 3D-Bilderzeugers 9 aus Fig. 2. Wie man erkennt, enthält der 3D-Bilderzeuger 9 zwei senkrecht zueinander angeordnete Lichtleisten 901 und 902. Die Lichtleisten 901, 902 enthalten auf ihrer Vorderseite (d.h. auf ihrer zum Bild IM gerichteten Seite) jeweils eine Vielzahl von Lichtelementen, die individuell ansteuerbar sind und beispielsweise als LEDs ausgestaltet sind. Zur Erzeugung des frei schwebenden Bilds IM werden die Lichtleisten 901, 902 mit einem im 3D-Bilderzeuger verbauten Motor in der y-z-Ebene in schnelle Rotation versetzt. Gleichzeitig werden die einzelnen Lichtelemente der Leisten geeignet angesteuert, so dass für den Betrachter beim Blick auf die Rotationsebene in Richtung auf die Lichtelemente das dreidimensionale Bild IM sichtbar wird, das vor der Rotationebene liegt. Die soeben beschriebene Technologie der 3D-Bilderzeugung ist an sich bekannt und wird erstmalig zur Anzeige von Assistenzinformation in einer Biegemaschine genutzt.

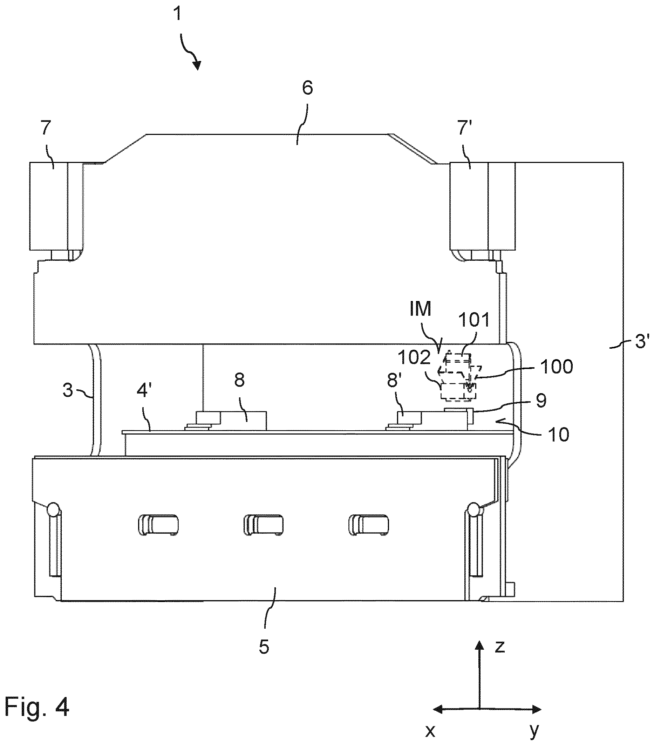

Fig. 4 zeigt in perspektivischer Seitenansicht eine zweite Ausführungsform einer erfindungsgemäßen Biegemaschine. Die Bauteile dieser Biegemaschine, die den Bauteilen aus den im Vorangegangenen beschriebenen Figuren entsprechen, sind mit den gleichen Bezugszeichen bezeichnet. Die Biegemaschine der zweiten Ausführungsform unterscheidet sich von der ersten Ausführungsform dahingehend, dass ein anderer Typ von 3D-Bilderzeuger zur Generierung des frei schwebenden dreidimensionalen Bilds genutzt wird und dieser 3D-Bilderzeuger an einer anderen Stelle angeordnet ist.

Aus Fig. 4 erkennt man sehr gut die beiden Anschläge 8, 8' der Biegemaschine 1, die auf dem unteren Querträger 4' vorgesehen sind und entlang dessen Längsrichtung beweglich sind. Die Anzeigeeinrichtung 10 mit dem 3D-Bilderzeuger 9 ist nunmehr an dem Anschlag 8' an dessen hinterem Ende vorgesehen. Der 3D-Bilderzeuger 9 generiert das dreidimensionale Bild IM, das im Inneren der Biegemaschine über dem 3D-Bilderzeuger 9 schwebt. In Analogie zur ersten Ausführungsform zeigt dieses Bild wieder einen Biegeschritt mit Werkstück 100, Oberwerkzeug 101 und Unterwerkzeug 102.

Der 3D-Bilderzeuger 9 aus Fig. 4 verwendet zur Bilderzeugung nunmehr keine rotierenden Lichtleisten mehr. Stattdessen wird eine andere Technologie genutzt. Beispielsweise kann der 3D-Bilderzeuger 9 ein Hologrammprojektor sein, aus dessen Oberseite Licht austritt, das mittels durchsichtiger Trägerflächen aus festem Material (z.B. Glas oder Kunststoff) eine Hologramm-Projektion erzeugt, die das dreidimensionale Bild IM darstellt. Die durchsichtigen Trägerflächen können beispielsweise die Seitenflächen einer Pyramide oder eines Pyramidenstumpfs bilden, wobei die Pyramide bzw. der Pyramidenstumpf derart auf ein Display auf der Oberseite des 3D-Bilderzeugers 9 aufgesetzt ist, dass die Seitenflächen nach oben auseinander laufen. Alternativ kann auch ein 3D-Bilderzeuger 9 verwendet werden, der keine Trägerflächen zur Bilderzeugung benötigt. Beispielsweise kann ein 3D-Bilderzeuger 9 genutzt werden, der das dreidimensionale Bild IM durch Ionisation von Luftmolekülen über einen Laserstrahl erzeugt.

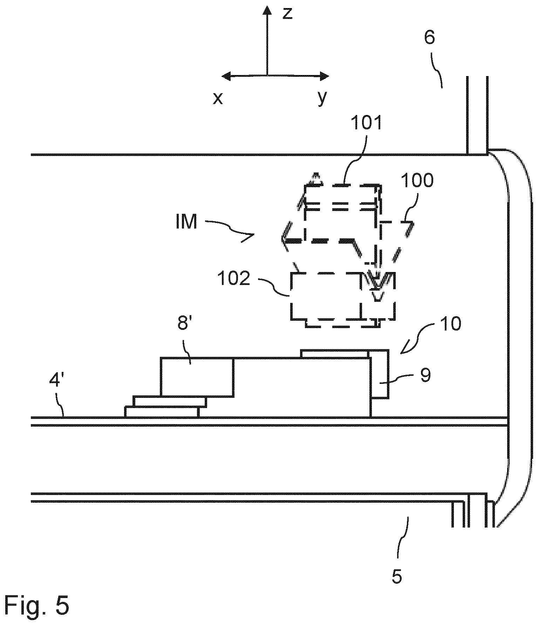

Fig. 5 zeigt eine Detailansicht aus Fig. 4, die nochmals das mit dem 3D-Bilderzeuger 9 erzeugte Bild IM wiedergibt. Man erkennt in Fig. 5 nochmals sehr gut das virtuell wiedergegebene Werkstück 100, das gerade mittels eines Oberwerkzeugs 101 und eines Unterwerkzeugs 102 gebogen wird.

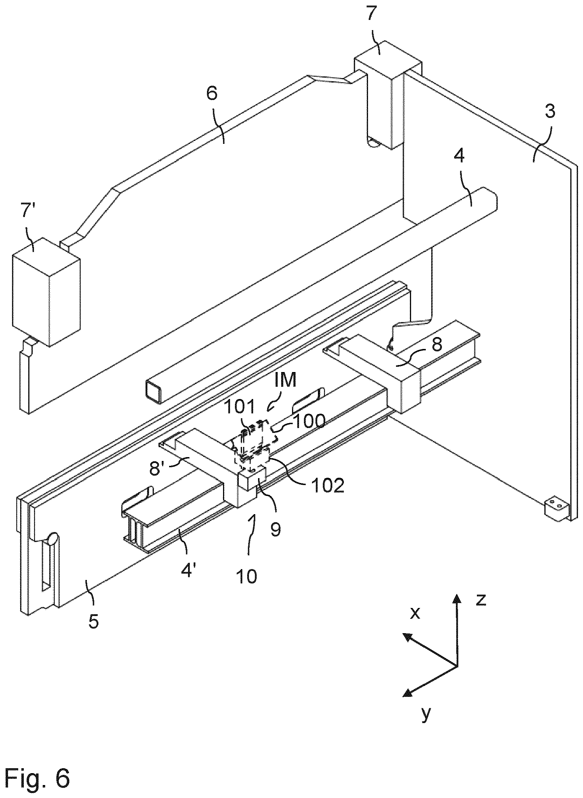

Fig. 6 ist eine ausschnittsweise Rückansicht der Biegemaschine aus Fig. 4. Man erkennt aus Fig. 6, dass das erzeugte dreidimensionale Bild IM im Inneren der Biegemaschine liegt und sich unmittelbar oberhalb des 3D-Bilderzeugers 9 befindet. Die Ausführungsform der Fig. 4 weist den Vorteil auf, dass der bereits vorgesehene bewegliche Anschlag 8' auch zur Bewegung des 3D-Bilderzeugers 9 und damit zur flexiblen Positionierung des erzeugten dreidimensionalen Bilds IM genutzt wird. Mit anderen Worten muss keine zusätzliche Aktorik zur Bewegung des 3D-Bilderzeugers 9 verbaut werden, sondern die bereits vorhandene Aktorik für den Anschlag kann zum Einsatz kommen.

Die im Vorangegangenen beschriebenen Ausführungsformen der Erfindung weisen eine Reihe von Vorteilen auf. Durch die Integration eines 3D-Bilderzeugers in einer Biegemaschine kann intuitiv Assistenzinformation für den Bediener der Biegemaschine in der Form eines dreidimensionalen Bilds visualisiert werden. Dabei ist es nicht erforderlich, dass der Bediener eine optische Einrichtung trägt. In einer bevorzugten Variante wird das dreidimensionale Bild direkt an Positionen im Bearbeitungsbereich der Biegemaschine angeordnet und ist hierdurch unmittelbar durch den Bediener wahrnehmbar, ohne dass dieser seinen Blick weg von dem Bearbeitungsbereich richten muss. Das dreidimensionale Bild kann gegebenenfalls animiert sein. Ferner kann das Bild das zu biegende Werkstück bzw. das entsprechende Biegewerkzeug wiedergeben. Für die Anzeige des dreidimensionalen Bilds können an sich bekannte 3D-Bilderzeuger genutzt werden, die jedoch erstmalig zur Wiedergabe von Assistenzinformation in einer Biegemaschine eingesetzt werden.

### Bezugszeichenliste

1 Biegemaschine (Abkantpresse)
2 Maschinenrahmen
3, 3' Seitenständer
4, 4' Querträger
5 Gegenbiegewange (Unterwange)
5a Werkzeugträger
6 Biegewange (Oberwange)
7, 7' hydraulische Aktuatoren
8, 8' Anschläge (Hinteranschläge)
9 3D-Bilderzeuger
901, 902 Lichtleisten
10 Anzeigeeinrichtung
11 Steuereinrichtung
12 Biegewinkel-Messeinrichtung
13 Bilderfassungseinrichtung (Kamera)
14 Strebe
B Biegelinie
IM dreidimensionales Bild
100 Werkstück innerhalb des dreidimensionalen Bilds IM
101 Biegewerkzeug (Oberwerkzeug) innerhalb des Bilds IM
102 Biegewerkzeug (Unterwerkzeug) innerhalb des Bilds IM

## Patentansprüche

1. Biegemaschine, beinhaltend
- eine Biegewange (6), welche zumindest in einer Arbeitsrichtung (z) der Biegemaschine (1) bewegbar ist, um ein Werkstück durch Biegen entlang einer Biegelinie (B) umzuformen,
- eine Anzeigeeinrichtung (10) und
- eine Steuereinrichtung (11),
wobei die Anzeigeeinrichtung (10) im Betrieb der Biegemaschine (1) durch die Steuereinrichtung (11) angesteuert wird, um Assistenzinformation zur Assistenz eines Bedieners mittels der Anzeigeeinrichtung (10) anzuzeigen,
**dadurch gekennzeichnet, dass**
die Anzeigeeinrichtung (10) einen oder mehrere 3D-Bilderzeuger (9) enthält, welche dazu eingerichtet sind, zumindest einen Teil der Assistenzinformation als ein frei im Raum schwebendes dreidimensionales Bild (IM) anzuzeigen.

2. Biegemaschine nach Anspruch 1, **dadurch gekennzeichnet, dass** zumindest einer der 3D-Bilderzeuger (9) derart ausgestaltet ist, dass er das dreidimensionale Bild (IM) erzeugt, ohne dass eine Trägerfläche aus festem Material zur Visualisierung des dreidimensionalen Bilds (IM) benötigt wird.

3. Biegemaschine nach Anspruch 1 oder 2, **dadurch gekennzeichnet, dass** zumindest einer der 3D-Bilderzeuger (9) eine oder mehrere Lichtleisten (901, 902) beinhaltet, wobei durch Rotation der Lichtleiste oder der Lichtleisten (901, 902) das dreidimensionale Bild generiert wird.

4. Biegemaschine nach einem der vorhergehenden Ansprüche, **dadurch gekennzeichnet, dass** zumindest einer der 3D-Bilderzeuger (9) das dreidimensionale Bild (IM) im Luftmedium, vorzugsweise im Luftmedium zwischen der Biegewange (6) und einer parallel zu dieser verlaufenden Gegenbiegewange (5), erzeugt.

5. Biegemaschine nach einem der vorhergehenden Ansprüche, **dadurch gekennzeichnet, dass** zumindest einer der 3D-Bilderzeuger (9) dazu eingerichtet ist, das dreidimensionale Bild (IM) in einem Bearbeitungsbereich der Biegemaschine und vorzugsweise an oder benachbart zu der Biegelinie (B) anzuzeigen.

6. Biegemaschine nach einem der vorhergehenden Ansprüche, **dadurch gekennzeichnet, dass** mehrere 3D-Bilderzeuger (9) in einer Richtung parallel zur Biegelinie (B) angeordnet sind.

7. Biegemaschine nach einem der vorhergehenden Ansprüche, **dadurch gekennzeichnet, dass** zumindest einer der 3D-Bilderzeuger (9) im Inneren der Biegemaschine (1) angeordnet ist und/oder zumindest einer der 3D-Bilderzeuger (9) an einer Biegewinkel-Messeinrichtung (12) angeordnet ist und/oder zumindest einer der 3D-Bilderzeuger (9) an einem Anschlag (8, 8') für das Werkstück angeordnet ist und/oder zumindest einer der 3D-Bilderzeuger (9) an einem Maschinenrahmen (2) der Biegemaschine (1) angeordnet ist und/oder zumindest einer der 3D-Bilderzeuger (9) an einem Träger (5a) für Biegewerkzeuge angeordnet und/oder zumindest einer der 3D-Bilderzeuger (9) an einer Biegehilfe angeordnet ist.

8. Biegemaschine nach einem der vorhergehenden Ansprüche, **dadurch gekennzeichnet, dass** zumindest einer der 3D-Bilderzeuger (9) bewegbar ist, um den Ort des dreidimensionalen Bilds (IM) zu verändern, wobei der zumindest eine 3D-Bilderzeuger (9) vorzugsweise parallel zur Biegelinie (B) verfahrbar ist.

9. Biegemaschine nach einem der vorhergehenden Ansprüche, **dadurch gekennzeichnet, dass** die Biegemaschine (1) derart ausgestaltet ist, dass zumindest zeitweise in dem dreidimensionalen Bild (IM) virtuell das Werkstück (100) in einer Sollform wiedergegeben ist, welche der erwünschten Form des realen Werkstücks zu einem Zeitpunkt vor oder während oder nach einem Biegeschritt entspricht.

10. Biegemaschine nach Anspruch 9, **dadurch gekennzeichnet, dass** das virtuell wiedergegebene Werkstück (100) an einer Sollposition positioniert ist, welche die erwünschte Position des realen Werkstücks zu dem Zeitpunkt vor oder während oder nach dem Biegeschritt ist.

11. Biegemaschine nach Anspruch 9 oder 10, **dadurch gekennzeichnet, dass** eine Bilderfassungseinrichtung (13) vorgesehen ist, um ein Bild enthaltend das reale Werkstück und das virtuell wiedergegebene Werkstück (100) zu erfassen, wobei die Steuereinrichtung (11) derart ausgestaltet ist, dass sie ermittelt, ob in dem erfassten Bild die Form des realen Werkstücks von der Sollform des virtuell wiedergegebenen Werkstücks (100) und/oder die Position des realen Werkstücks von der Sollposition des virtuell wiedergegebenen Werkstücks (100) abweicht, wobei bei einer Abweichung die Steuereinrichtung (11) eine vorgegebene Aktion auslöst.

12. Biegemaschine nach einem der vorhergehenden Ansprüche, **dadurch gekennzeichnet, dass** die Biegemaschine (1) derart ausgestaltet ist, dass zumindest zeitweise in dem dreidimensionalen Bild (IM) virtuell zumindest ein Biegewerkzeug (101, 102) wiedergegeben ist.

13. Biegemaschine nach Anspruch 12, **dadurch gekennzeichnet, dass** das zumindest eine virtuell wiedergegebene Biegewerkzeug (101, 102) an einer Sollposition positioniert ist, welche die erwünschte Position des zumindest einen realen Biegewerkzeugs (101, 102) zu einem Zeitpunkt vor oder während oder nach einem Biegeschritt ist.

14. Biegemaschine nach Anspruch 13, **dadurch gekennzeichnet, dass** ein Bilderfassungsmittel vorgesehen ist, um ein Bild enthaltend das zumindest eine reale Biegewerkzeug und das zumindest eine virtuell wiedergegebene Biegewerkzeug (101, 102) zu erfassen, wobei die Steuereinrichtung (11) derart ausgestaltet ist, dass sie ermittelt, ob in dem erfassten Bild die Position des zumindest einen realen Biegewerkzeugs von der Sollposition des zumindest einen virtuell wiedergegebenen Biegewerkzeugs (101, 102) abweicht, wobei bei einer Abweichung die Steuereinrichtung (11) eine vorbestimmte Aktion auslöst.

15. Biegemaschine nach einem der Ansprüche 12 bis 14 in Kombination mit einem der Ansprüche 9 bis 11, **dadurch gekennzeichnet, dass** in dem dreidimensionalen Bild (IM) sowohl das virtuell wiedergegebene Werkstück (100) als auch das zumindest eine virtuell wiedergegebene Biegewerkzeug (101, 102) enthalten sind, wobei eine Sollkonstellation dargestellt ist, welche eine erwünschte Anordnung von dem realen Werkstück und dem zumindest einen realen Biegewerkzeug zu dem Zeitpunkt vor oder während oder nach einem Biegeschritt repräsentiert.

16. Biegemaschine nach einem der vorhergehenden Ansprüche, **dadurch gekennzeichnet, dass** die Biegemaschine (1) derart ausgestaltet ist, dass zumindest zeitweise in dem dreidimensionalen Bild (IM) ein oder mehrere Biegeparameter in textueller und/oder grafischer Form wiedergegeben sind.

17. Biegemaschine nach einem der vorhergehenden Ansprüche, **dadurch gekennzeichnet, dass** der oder die 3D-Bilderzeuger (9) durch einen Bediener mittels Gesten steuerbar sind.
